# EUROPÄISCHE PATENTANMELDUNG

(11) **EP 4 357 747 A1**
(43) Veröffentlichungstag der Anmeldung: **24.04.2024**
(21) Anmeldenummer: 22202833.4
(22) Anmeldetag: 20.10.2022
(51) Int. Cl.: G01M 3/38, G01N 21/90

(54) **VORRICHTUNG UND VERFAHREN ZUM DETEKTIEREN VON LÖCHERN IN GESCHLOSSENEN HOHLKÖRPERN**

(71) Anmelder: Primetals Technologies Austria GmbH, 4031 Linz (AT)
(72) Erfinder: Fischer, Paul, 4048 Puchenau (AT); Glechner, Julian Michael, 4600 Wels (AT); Goetz, Martin, 4213 Unterweitersdorf (AT); Hartl, Franz, 4720 Kallham (AT); Steiner, Dietmar, 3321 Ardagger (AT)
(74) Vertreter: Metals@Linz

(57) **Zusammenfassung**

Die Erfindung liegt auf dem Gebiet von metallurgischen Anlagen, konkret werden Hohlkörper überwacht und unerwünschte Löcher rasch detektiert.

Die Aufgabe der vorliegenden Erfindung ist das Feststellen eines unerwünschten Loches in einem Hohlkörper unmittelbar bei dessen Auftreten.

Die Aufgabe wird gelöst durch eine Vorrichtung und ein Verfahren zur Detektion von zumindest einem unerwünschten Loch (8) eines geschlossenen Hohlkörpers (10), wobei der Hohlkörper (10) für den Einsatz in einer metallurgischen Anlage vorgesehen ist. Im Hohlkörper (10) wird ein Lichtwellenleiter (1) in dem Hohlkörper (10) angeordnet und eine Auswerteeinrichtung (5) ist mit dem Lichtwellenleiter (1) verbunden. Der Lichtwellenleiter (1) kann ein Auftreten von Lichtstrahlung innerhalb des geschlossenen Hohlkörpers (10) erfassen, wodurch die Auswerteeinrichtung (1) ein unerwünschtes Loch (8) des geschlossenen Hohlkörpers (10) detektiert.

## Beschreibung

### Bezeichnung der Erfindung

Die Erfindung liegt auf dem Gebiet von metallurgischen Anlagen, konkret werden Hohlkörper überwacht und unerwünschte Löcher rasch detektiert.

Die Erfindung betrifft eine Vorrichtung und ein Verfahren zur Detektion von zumindest einem unerwünschten Loch eines geschlossenen Hohlkörpers, wobei der Hohlkörper für den Einsatz in einer metallurgischen Anlage vorgesehen ist.

### Gebiet der Technik

Die vorliegende Erfindung betrifft das Gebiet der Leckage Erkennung von geschlossenen Hohlkörpern, in welchen Flüssigkeiten oder Gas durchströmt oder gelagert wird. Einerseits betrifft die Erfindung eine Vorrichtung zur Detektion von zumindest einem unerwünschten Loch eines geschlossenen Hohlkörpers, wobei der Hohlkörper für den Einsatz in einer metallurgischen Anlage vorgesehen ist.

Andrerseits betrifft die Erfindung ein Verfahren zur Detektion von zumindest einem unerwünschten Loch eines geschlossenen Hohlkörpers.

### Stand der Technik

Leckagen im Kühlsystem von metallurgischen Industrieanlagen bergen ein hohes Gefahrenpotential, da der Kontakt von Kühlwasser mit flüssigen Metallschmelze zu schweren Unfällen führen kann. Durch die hohe Temperatur von flüssigem Metall kann es zu einer spontanen Verdampfung von Wasser kommen, Dissoziation von Wasser und somit eine Gefahr durch entstehenden explosiven Wasserstoff.

Aus diesem Grund ist es wichtig unerwünschte Löcher in den Kühlsystemen unmittelbar zu erkennen.

Es gibt bereits verschiedene Systeme, um eine Leckage zu erkennen, wie zum Beispiel mithilfe einer Durchflussmessung des Kühlmediums beim Zufluss und beim Abfluss des Kühlsystems - über eine Massenbilanzierung. Eine weitere Methode ist in der EP2880389B1 gezeigt, darin wird ein Teil des Abgasstromes auf das Vorhandensein von Wasserstoff untersucht. Wenn im Abgasstrom ein gewisser Schwellwert des Wasserstoffanteils im Abgasstromes überschritten wird, so ist dies ein Hinweis auf eine Leckage. Das Problem bei diesen Methoden ist, dass der Ort der Leckage nicht eingegrenzt werden kann, sondern nur eine Leckage im Kühlsystem erkannt werden kann.

### Zusammenfassung der Erfindung

Die Aufgabe der vorliegenden Erfindung ist das Feststellen eines unerwünschten Loches in einem Hohlkörper unmittelbar bei dessen Auftreten.

Die Aufgabe wird gelöst durch einen im Hohlkörper angeordneten Lichtwellenleiter. Eine Auswerteeinrichtung ist mit dem Lichtwellenleiter verbunden, wobei der Lichtwellenleiter ein Auftreten von Lichtstrahlung erfassen und weiterleiten kann, wodurch die Auswerteeinrichtung ein unerwünschtes Loch des Hohlkörpers detektiert. Der Lichtwellenleiter besteht vorzugsweise aus einem Faserkern, einem Fasermantel und einer Schutzbeschichtung. Im Zusammenhang mit dieser Erfindung sind sämtliche Hohlkörper mitumfasst in denen ein lichtdurchlässiges Medium gelagert oder transportiert wird, und im Falle eines Loches - welches zu einer Leckage führt - Licht von außen in den Hohlkörper eintritt. Dies können Gasleitungen, Tanks oder Behälter zum Lagern von Flüssigkeiten oder Gasen sein.

In einer vorteilhaften Ausführung weist der Lichtwellenleiter eine Vielzahl von Einkopplungsbereichen entlang seiner Länge auf.

Die Einkopplungsbereiche sind eine Modifikation des Fasermaterials, somit kann bei Auftreten einer Lichtstrahlung diese zum Faserkern gelangen. Die Einkopplungsbereiche kann beispielsweise thermisch mittels eines Stempels oder durch eine mechanische Bearbeitung erfolgen. Eine weitere Methode ist eine lokale Streckung des Lichtwellenleiters (Tapered optical fibre). Der Abstand zwischen den Einkopplungsbereichen entlang einer Längserstreckung des Lichtwellenleiters kann beispielsweise das doppelte eines Rohrdurchmessers sein oder bei der Anwendung in einer Sauerstoffblaselanze können die Einkopplungsbereiche auf einen bestimmten Abschnitt konzentriert werden, beispielsweise ein Abstand von 20 bis 50mm.

In einer vorteilhaften Ausführungsform ist der Hohlkörper ein Rohr mit einem Rohrdurchmesser und die Einkopplungsbereiche entlang der Länge des Lichtwellenleiters in einem Abstand von im Wesentlichen dem doppelten Rohrdurchmesser angebracht sind. Durch den Abstand ist sichergestellt, dass zuverlässig ein unerwünschtes Loch erkannt werden kann.

In einer bevorzugten Ausführungsform ist der Lichtwellenleiter mäanderförmig innerhalb des Hohlkörpers angeordnet. Diese Ausführung ist in einem großen Hohlkörper wie beispielsweise ein Tank von Vorteil, damit die Löcher sicher detektiert werden können.

In einer besonders vorteilhaften Ausführungsform ist der Hohlkkörper in oder an einem Kühlpaneel angeordnet, welches bei einem Elektrolichtbogenofen eingesetzt wird.

In einer zweckmäßigen Ausführungsform sind zumindest drei parallel nebeneinander angeordnete Lichtwellenleiter entlang einer Länge des Hohlkörpers angeordnet. Jeder Lichtwellenleiter entlang der Länge weist jeweils Erkennungsbereiche auf, an welchen Licht detektiert werden kann, und Nichterkennungsbereiche, an welchen kein Licht detektiert werden kann. Die Erkennungsbereiche und Nichterkennungsbereiche der zumindest drei Lichtwellenleiter sind nach einem Erkennungscode angeordnet, damit die Auswerteeinrichtung eine Position des Loches bestimmen kann.

Durch diese Ausführung kann der Bereich eingeschränkt werden an welchem das Loch auftritt. Die Nichterkennungsbereiche können beispielsweise durch eine eigene lichtundurchlässige Ummantelung erzielt werden. Des Weiteren ist es denkbar, dass beispielsweise in diesem Bereich keine Einkopplungsbereiche vorhanden sind oder der Fasermantel aus anderem Material hergestellt ist.

In einer weiteren vorteilhaften Ausführungsform ist der Erkennungscode ein Binärcode oder ein Gray Code beziehungsweise weitere Codierungen, die für diese Anwendung geeignet sind und dem Stand der Technik entsprechen.

Die Aufgabe wird auch durch ein Verfahren gelöst, wobei ein im Hohlkörper angebrachter Lichtwellenleiter, mit einer Auswerteeinrichtung verbunden ist. Ein Lichtwellenleitersignal wird ausgewertet und sobald am Lichtwellenleiter eine Einkopplung von Licht auftritt kann auf ein unerwünschtes Loch des Hohlkörpers geschlossen werden. Die Auswerteeinreichtung übermittelt ein entsprechendes Signal an eine Anzeigeeinheit und/oder eine Anlagensteuerung.

Bevorzugte Ausführungsvarianten des Verfahrens sind in den Ansprüchen 9-14 angeführt

### Kurze Beschreibung der Zeichnungen

Fig. 1 zeigt eine Rohrleitung mit einem Lichtwellenleiter
Fig. 2 zeigt einen Lichtwellenleiter mit Einkopplungsbereiche
Fig. 3 zeigt schematisch einen Elektrolichtbogenofen mit Lichtwellenleiter
Fig. 4 zeigt einen Ausschnitt einer Rohrleitung mit einem Lichtwellenleiter
Fig.5 zeigt schematisch eine Sauerstoffblaselanze mit zwei Lichtwellenleitern
Fig. 6 zeigt drei parallel nebeneinanderliegende Lichtwellenleiter in einem Hohlkörper

### Beschreibung der Ausführungsformen

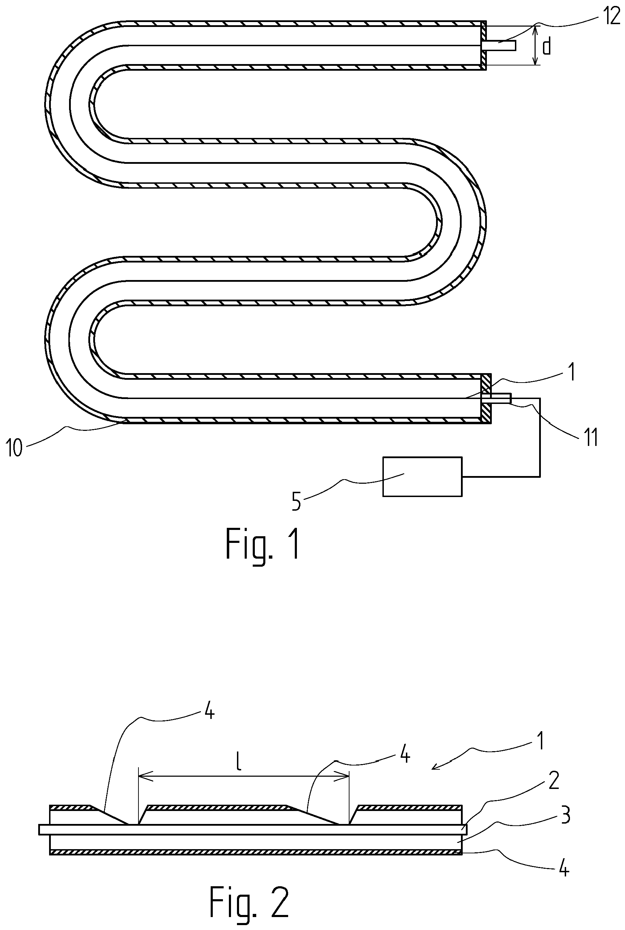

In der Fig. 1 ist eine Rohrleitung 10 mit einem Zulauf 12 und einem Ablauf 11 gezeigt. Innerhalb der Rohrleitung 10 ist ein Lichtwellenleiter 1 angeordnet. Der Lichtwellenleiter 1 mit ist mit einer Auswerteinheit 5 verbunden.

In der Fig. 2 ist ein Lichtwellenleiter 1 mit Einkopplungsbereichen 4 dargestellt. Die Einkopplungsbereiche sind jeweils in einem Abstand l angeordnet. Der Lichtwellenleiter 1 besteht bevorzugt aus einem Faserkern 2, einem Fasermantel 3 und einer Schutzschicht 4.

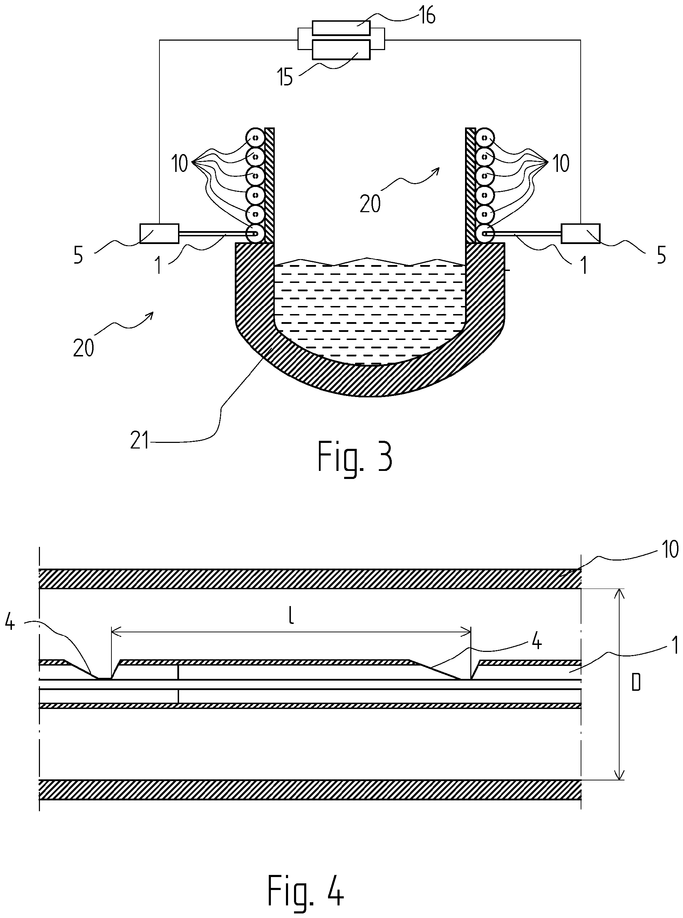

In der Fig. 3 ist schematisch ein Elektrolichtbogenofen 20 dargestellt. Dieser besteht aus einem Schmelzgefäß 21 und gekühlten Seitenwänden 22. Die gekühlten Seitenwände 22 bestehen aus einer Vielzahl von mit Kühlmittel durchflossenen Rohrleitungen 10. In den Rohrleitungen 10 ist ein Lichtwellenleiter 1 angeordnet. Die Lichtwellenleiter 1 werden dann jeweils einer Auswerteeinrichtung 5 zugeführt. Die Auswerteeinrichtung 5 übermittelt - in dieser Ausführung - Signale an eine Anlagensteuerung 15 und eine Anzeigeeinheit 16, beispielsweise einen Bildschirm.

In der Fig. 4 ist ein Ausschnitt einer Rohrleitung 10 gezeigt. Die Rohrleitung 10 weist einen Durchmesser D auf. In der Rohrleitung 10 ist ein Lichtwellenleiter 1 mit Einkopplungsbereichen 4 angeordnet, wobei die Einkopplungsbereiche 4 einen Abstand l zueinander aufweisen. In einer bevorzugten Ausführung ist der Abstand l ungefähr so groß wie der doppelte Rohrdurchmesser.

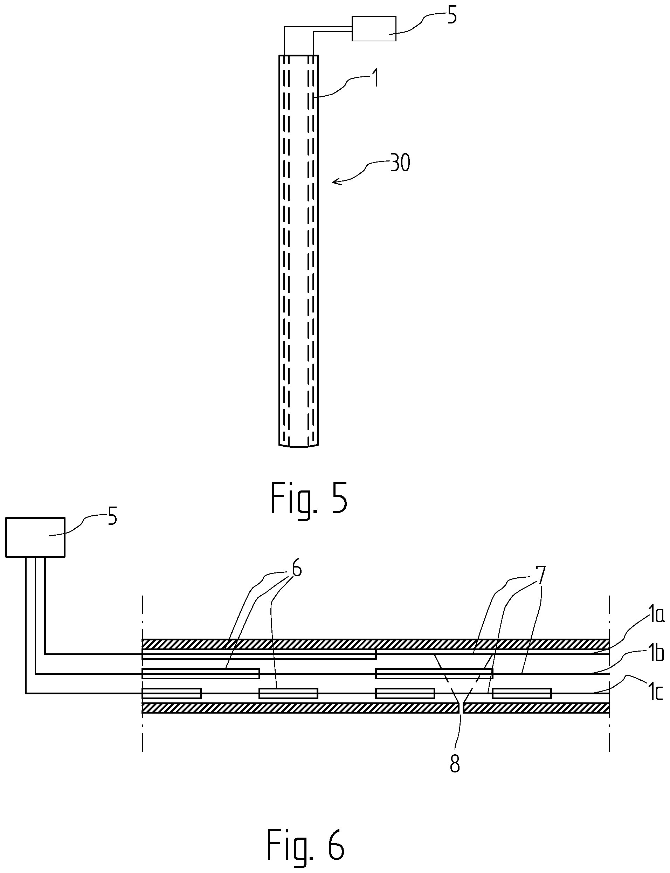

In der Fig. 5 ist schematisch eine Sauerstoffpblaselanze 30 gezeigt. In dieser Sauerstoffblaselanze 30 sind zwei Lichtwellenleiter 1 angeordnet, welche jeweils mit der Auswerteinrichtung 5 verbunden sind.

In Fig. 6 ist ein Hohlkörper 10 dargestellt der drei parallel nebeneinander angeordnete Lichtwellenleiter 1a, 1b, 1c aufweist, welche entlang einer Länge des Hohlkörpers angeordnet sind. Jeder Lichtwellenleiter weist entlang der Länge jeweils Erkennungsbereiche 7 auf- wo Licht detektiert werden kann - und Nichterkennungsbereiche 6 - wo kein Licht detektiert werden kann.

Die Erkennungsbereiche 7 und Nichterkennungsbereiche 6 der zumindest drei Lichtwellenleiter sind in dieser Ausführung nach einem Binärcode angeordnet. Die Auswerteeinrichtung 5, welche mit den drei Lichtwellenleitern 1 verbunden ist, kann eine Position des Loches 8 bestimmen aufgrund von den erkannten Signalen der drei Lichtwellenleitern 1. Wenn am Loch 8 Licht von außen eindringt, dann erkennen die Lichtwellenleiter 1a und 1c Licht und der Lichtwellenleiter 1b erkennt kein Licht. Die Auswerteeinrichtung 5 kann somit den Bereich einschränken, an welcher das Loch vorhanden sein muss, auf den Bereich, wo diese Kombination auftreten kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1, 1 a-c: Lichtwellenleiter
- 2: Faserkern
- 3: Fasermantel
- 4: Einkopplungsbereiche
- 5: Auswerterichtung
- 6: Nichterkennungsbereiche
- 7: Erkennungsbereiche
- 8: Loch
- 10: Rohrleitung
- 11: Zulauf
- 12: Ablauf
- 15: Anlagensteuerung
- 16: Anzeigeeinheit
- 20: Elektrolichtbogenofen
- 21: Schmelzgefäß
- 22: Seitenwände
- 30: Sauerstoffblaselanze
- D: Durchmesser
- l: Abstand

## Patentansprüche

1. Vorrichtung zur Detektion von zumindest einem unerwünschten Loch (8) eines geschlossenen Hohlkörpers (10), wobei der Hohlkörper (10) für den Einsatz in einer metallurgischen Anlage vorgesehen ist, **dadurch gekennzeichnet, dass** im Hohlkörper (10) ein Lichtwellenleiter (1) angeordnet ist und eine Auswerteeinrichtung (5) mit dem Lichtwellenleiter (1) verbunden ist, wobei der Lichtwellenleiter (1) ein Auftreten von Lichtstrahlung innerhalb des geschlossenen Hohlkörpers (10) erfassen kann, wodurch die Auswerteeinrichtung (1) ein unerwünschtes Loch (8) des geschlossenen Hohlkörpers (10) detektiert.

2. Vorrichtung zur Detektion von zumindest einem unerwünschten Loch (8) eines geschlossenen Hohlkörpers (10) nach Anspruch 1, **dadurch gekennzeichnet, dass** der Lichtwellenleiter (1) eine Vielzahl von Einkopplungsbereiche (4) entlang seiner Länge aufweist.

3. Vorrichtung zur Detektion von zumindest einem unerwünschten Loch (8) eines geschlossenen Hohlkörpers (10) nach Anspruch 1 - 2, **dadurch gekennzeichnet, dass** der Hohlkörper (10) ein Rohr mit einem Rohrdurchmesser (D) ist und die Einkopplungsbereiche (4) entlang der Länge des Lichtwellenleiters (1) in einem Abstand (l) von im Wesentlichen dem doppelten Rohrdurchmesser (D) angebracht sind.

4. Vorrichtung zur Detektion von zumindest einem unerwünschten Loch (8) eines geschlossenen Hohlkörpers (10) nach Anspruch 1 - 3, **dadurch gekennzeichnet, dass** der Lichtwellenleiter (1) mäanderförmig innerhalb des Hohlkörpers (10) angeordnet ist.

5. Vorrichtung zur Detektion von zumindest einem unerwünschten Loch (8) eines geschlossenen Hohlkörpers (10) nach Anspruch 1 - 4, **dadurch gekennzeichnet, dass** der Hohlkörper (10) sich an einem Kühlpanel für einen Elektrolichtbogenofen (20) befindet.

6. Vorrichtung zur Detektion von zumindest einem unerwünschten Loch (8) eines geschlossenen Hohlkörpers (10) nach Anspruch 1 - 5, **dadurch gekennzeichnet, dass** zumindest drei parallel nebeneinander angeordnete Lichtwellenleiter (1a-1c) entlang einer Länge des Hohlkörpers (10) angeordnet sind, und jeder Lichtwellenleiter (1a-1c) entlang der Länge jeweils Erkennungsbereiche (7) aufweist, an welchen Licht detektiert werden kann, und Nichterkennungsbereiche (6) aufweist, an welchen kein Licht detektiert werden kann und die Erkennungsbereiche (7) und Nichterkennungsbereiche (6) der zumindest drei Lichtwellenleiter (1a-1c) nach einem Erkennungscode angeordnet sind, damit die Auswerteeinrichtung (5), welche mit den zumindest drei Lichtwellenleitern (1a-1c) verbunden ist, eine Position des Loches (8) bestimmen kann.

7. Vorrichtung zur Detektion von zumindest einem unerwünschten Loch (8) eines geschlossenen Hohlkörpers (10) nach Anspruch 6, **dadurch gekennzeichnet, dass** der Erkennungscode ein Binärcode oder ein Gray Code ist.

8. Verfahren zur Detektion von zumindest einem unerwünschten Loch (8) eines geschlossenen Hohlkörpers (10), **dadurch gekennzeichnet, dass** ein im Hohlkörper (10) angebrachter Lichtwellenleiter (1a-1c) mit einer Auswerteeinrichtung (5) verbunden ist und eine Auswertung des Lichtwellenleitersignals erfolgt und sobald ein Signal, welches auf Licht zurückzuführen ist, detektiert wird, kann ein unerwünschtes Loch (8) des Hohlkörpers (10) erkannt werden und die Auswerteeinrichtung (5) übermittelt ein entsprechendes Signal an eine Anzeigeeinheit (16) und/oder eine Anlagensteuerung (15).

9. Verfahren zur Detektion von zumindest einem unerwünschten Loch (8) eines geschlossenen Hohlkörpers (10) nach Anspruch 8, **dadurch gekennzeichnet, dass** der Lichtwellenleiter (1) eine Vielzahl von Einkopplungsbereiche (4) entlang seiner Länge aufweist.

10. Verfahren zur Detektion von zumindest einem unerwünschten Loch (8) eines geschlossenen Hohlkörpers (10) nach Anspruch 8-9, **dadurch gekennzeichnet, dass** der Hohlkörper (10) ein Rohr mit einem Rohrdurchmesser ist und die Einkopplungsbereiche (4) entlang der Länge des Lichtwellenleiters (1) in einem Abstand (1) von im Wesentlichen dem doppelten Rohrdurchmesser (D) angebracht sind.

11. Verfahren zur Detektion von zumindest einem unerwünschten Loch (8) eines geschlossenen Hohlkörpers (10) nach Anspruch 8-9, **dadurch gekennzeichnet, dass** der Lichtwellenleiter (1) mäanderförmig innerhalb des Hohlkörpers (10) angeordnet ist.

12. Verfahren zur Detektion von zumindest einem unerwünschten Loch (8) eines geschlossenen Hohlkörpers (10) nach Anspruch 8-11, **dadurch gekennzeichnet, dass** der Hohlkörper (10) sich an einem Kühlpanel für einen Elektrolichtbogenofen (20) befindet.

13. Verfahren zur Detektion von zumindest einem unerwünschten Loch (8) eines geschlossenen Hohlkörpers (10) nach Anspruch 8-12, **dadurch gekennzeichnet, dass** zumindest drei parallel nebeneinander angeordnete Lichtwellenleiter (1) entlang einer Länge des Hohlkörpers (10) angeordnet sind, und jeder Lichtwellenleiter (1) entlang der Länge jeweils Erkennungsbereiche (7) aufweist, an welchen Licht detektiert werden kann, und Nichterkennungsbereiche (6) aufweist, an welchen kein Licht detektiert werden kann und die Erkennungsbereiche (7) und Nichterkennungsbereiche (6) der zumindest drei Lichtwellenleiter (1a-1c) nach einem Erkennungscode angeordnet sind, damit mithilfe der Auswerteeinrichtung (5), welche mit den zumindest drei Lichtwellenleitern (1a-1c) verbunden ist, eine Position des Loches (8) bestimmt werden kann.

14. Verfahren zur Detektion von zumindest einem unerwünschten Loch (8) eines geschlossenen Hohlkörpers (10) nach Anspruch 13, **dadurch gekennzeichnet, dass** der Erkennungscode ein Binärcode oder ein Gray Code ist.
